# EUROPÄISCHE PATENTSCHRIFT

(11) **EP 1 591 856 B1**
(45) Veröffentlichungstag und Bekanntmachung des Hinweises auf die Patenterteilung: **07.03.2007**
(21) Anmeldenummer: 05009028.1
(22) Anmeldetag: 25.04.2005
(51) Int. Cl.: G05D 16/20, F16K 31/06

(54) **Druckregelventil**
Pressure control valve
Vanne de régulation de pression

(30) Priorität: 26.04.2004 DE 102004020268
(43) Veröffentlichungstag der Anmeldung: 02.11.2005
(73) Patentinhaber: HYDRAULIK-RING GMBH, 97828 Marktheidenfeld (DE)
(72) Erfinder: Müller, Falk Rainer, 97080 Würzburg (DE); Gerhart, Roland, 97840 Hafenlohr (DE)
(74) Vertreter: Cremer, Ulrike Theresia

(56) Entgegenhaltungen:
- DE-A1- 19 906 250
- US-A- 4 998 559
- US-A- 5 144 881
- US-A- 6 109 300
- US-A1- 2002 053 362
- US-B1- 6 315 268
- US-B1- 6 328 065
- US-B2- 6 578 606

## Beschreibung

Die Erfindung betrifft ein Druckregelventil, insbesondere ein elektromagnetisches Druckregelventil.

Aus EP 1 004 066 ist ein elektromagnetisches Druckregelventil bekannt, mit einem Magnetteil aus einer Spule, einem Spulenkern und einem verschiebbaren Anker. Das Druckregelventil umfasst dabei einen Zulauf, einen Rücklauf, einen Verbraucheranschluss und ein mit dem Anker zusammenwirkendes Ventilelement, wobei in einem Ventilteil ein erstes und ein zweites Sitzventil vorgesehen sind. Hierbei ist es von Nachteil, dass das gezeigte Ventil durch die beiden Sitzventile eine aufwendige Fertigung erfordert.

DE 199 06 250 A1 offenbart ein elektromagnetisches Druckregelventil mit einem Sitzventil, bei dem ein Stößel über eine Feder mit einem Schieber verbunden ist. Der Schieber wird durch den sich einstellenden Druck eines Druckmittes betätigt (Vorsteuerstufe) und steuert über Steuerflächen und eine Steuerkante den Druck an einen Verbraucheranschluß (Hauptstufe).

Die US 6 578 606 B2 (Hydraulik-Ring GmbH) zeigt in Ihrer Figur 2 ein Ventil, dessen federvorgespannte Schieberrückbewegung durch eine Entlastungsbewegung eines Verschlusselements an einer Tasse eröffnet wird. Das Ventil führt eine ziehende Bewegung durch.

Aus der US 5 144 881 (Mercedes-Benz AG) ist bekannt, dass durch ein Rückschlagsventil in einem Schieber eine Überdrucksicherheitsfunktion in den Schieber integriert werden kann, um das Verkanten des Schiebers abzusichern.

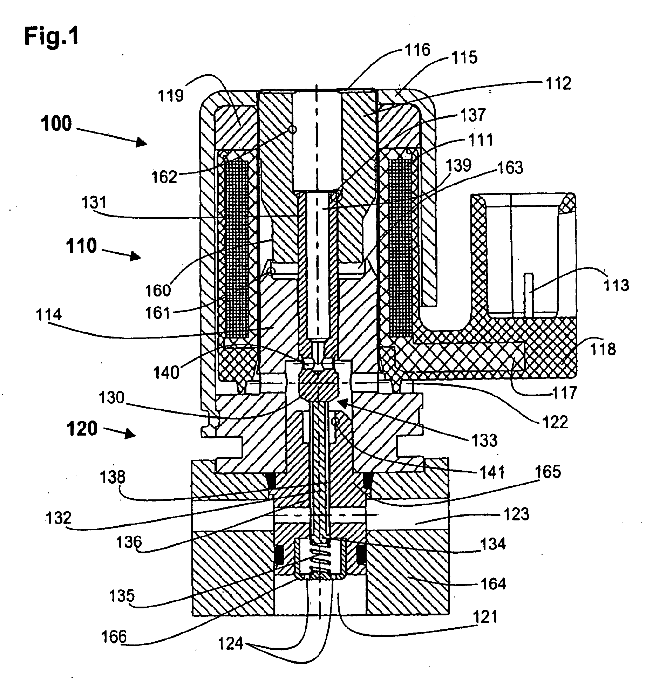

Aus der US 2002/0053362 A1 ist ein Ventil mit unterschiedlichen Ausgestaltungen bekannt (siehe Figur 13 zusammen mit Figur 1), in der der A-Anschluss gegensinnig zu einem T-Anschluss aus einem P-Anschluss gesteuert werden kann, indem an der Ventilstrecke zwei Ablaufkanten vorgesehen sind.

Die **Aufgabe** der Erfindung besteht darin, ein Druckregelventil anzugeben, das einfach zu fertigen ist und im geschlossenen Zustand nur eine reduzierte Leckage über den Zulauf aufweist.

Diese Aufgabe wird gemäß den Merkmalen des unabhängigen Patentanspruchs gelöst. Weiterbildungen der Erfindung ergeben sich auch aus den abhängigen Ansprüchen.

Zur Lösung der Aufgabe wird ein Druckregelventil, insbesondere ein elektromagnetisches Druckregelventil angegeben, mit einem Magnetteil, das mindestens eine elektrische Spule und einen verschiebbar gelagerten Anker zumindest teilweise innerhalb der Spule aufweist. Weiterhin ist ein Ventilteil vorgesehen, das einen Zulauf, einen Rücklauf, einen Verbraucheranschluss und ein Ventilelement umfasst, wobei das Ventilelement wiederum einen Schieber und ein Sitzventil aufweist.

Dabei ist es von Vorteil, dass der Schieber im inaktiven oder geschlossenen Zustand des Ventils (d.h. wenn kein Strom durch die Spule fließt) den Fluss eines Fluids, z.B. eines Öls bzw. eines Getriebeöls, von dem Zulauf zum Verbraucheranschluss bzw. zum Rücklauf verschließt. Dabei kann vorzugsweise der Verbraucheranschluss zur hydraulischen Steuerung beispielsweise von Aktuatoren zur Nockenwellenverstellung und/oder von Aktuatoren im Getriebe eines Kraftfahrzeugs vorgesehen sein. Der Rücklauf sammelt das Fluid in einem Reservoir aus dem es beispielsweise mittels einer Pumpe in den Zulauf des Druckregelventils gepumpt wird.

Fließt ein Strom durch die Spule, so wird der Anker innerhalb der Spule bewegt und öffnet in einer Wirkverbindung über das Ventilelement den Schieber, so dass das Fluid über den Zulauf zum Verbraucheranschluss und ebenso (wenngleich in verminderter Stärke) zum Rücklauf fließen kann. Wird der Strom durch die Spule weiter erhöht, so reduziert das Sitzventil allmählich den Durchfluss des Fluids über den Rücklauf, der Druck über den Verbraucheranschluss wird demgemäß erhöht, da mit steigendem Strom zunehmend weniger des über den Zulauf zugeführten Fluids über den Rücklauf entweichen kann. Vorzugsweise wird über den Strom durch die Spule der Druck auf den Verbraucheranschluss in einem weiten Bereich linear geregelt. Mit anderen Worten ermöglicht die elektrische Ansteuerung der Spule eine vorzugsweise nahezu lineare Regelung des Drucks über den Verbraucheranschluss. Dabei kann die Regelung je nach Auslegung des Ventils auch umgekehrt erfolgen, d.h. mit steigendem Strom nimmt der über den Verbraucheranschluss geregelte Druck ab.

Hierbei ist es von Vorteil, dass in einem inaktiven Zustand der Schieber den Kanal zwischen Zulauf und Verbraucheranschluss bzw. Rücklauf vorzugsweise vollständig verschließt, so dass allenfalls eine minimal Leckage an dem Schieber vorbei möglich ist. Je nach Fertigungsgenauigkeit kann diese Leckage minimiert werden, so dass im geschlossenen Zustand des Schiebers nahezu kein Fluid durch den Zulauf fließen kann.

Eine Weiterbildung besteht darin, dass das Sitzventil bzw. der Schieber jeweils als ein Schließglied ausgestaltet sind.

Eine andere Weiterbildung ist es, dass das Ventilelement einen Stift umfasst, der mit dem Anker in Wirkverbindung steht. Somit ist es möglich, dass der Anker, der über den Stromfluss durch die Spule bewegbar ist, seine Bewegung auf den Stift überträgt.

Insbesondere ist es eine Weiterbildung, dass der Stift an seinem dem Magnetteil abgewandten Ende als ein Sitzventil ausgestaltet ist, bei welchem das Ventilelement mit einer Steuerbohrung zusammenwirkt. Vorzugsweise wird über dieses Sitzventil eine Drosselfunktion des Druckregelventils anhand der Stromzufuhr durch die Spule geregelt. Wird der elektrische Strom durch die Spule erhöht, bewegt sich der Anker weiter in die Spule und drückt das Ventilelement gegen die Steuerbohrung. Dadurch wird der Fluidfluss von dem Zulauf zum Rücklauf gedrosselt, wodurch der Druck im Verbraucheranschluss steigt.

Eine Ausgestaltung besteht darin, dass der Stift eine axiale Bohrung und eine Querbohrung umfasst, durch die das Fluid in das Innere des Ankers, der ebenfalls eine Bohrung aufweist, die den Stift aufnimmt, fließen kann. Hierbei weist vorzugsweise der Stift entlang seiner Wirkverbindung mit dem Anker (z.B. entlang seines Presssitzes mit dem Anker) ein Mittel zur Fluidfiihrung, z.B. eine Nut im Anker, auf. Durch diese Nut kann das Fluid in den Arbeitsspalt des Ankers fließen. Somit sind insbesondere die Freiräume innerhalb der Spule, die z.B. von dem Anker zu dessen Bewegung benötigt werden, mit dem Fluid gefüllt. Bewegt sich der Anker, ist durch das Mittel zur Fluidführung (die beispielhaft erwähnte Nut zwischen Anker und Stift) eine entsprechende Verdrängung des Fluids gewährleistet, so dass der Anker bewegbar ist. Die Bewegung des Ankers verdrängt das Fluid über das Mittel zur Fluidführung am Anker, weiter über die Bohrung und die Querbohrung des Stifts in den Fluidkreislauf, insbesondere zum Rücklauf.

Das Mittel zur Fluidführung ist beispielsweise mindestens eine Anker-Nut in der Ankerbohrung.

Eine andere Weiterbildung besteht darin, dass das Ventilelement einen Stößel umfasst, der über den Stift betätigt wird. Vorzugsweise wird dazu eine Steuerbohrung für den Stößel vorgesehen, der über das Stiftende, das vorzugsweise als das bewegliche Teil eines Sitzventils ausgebildet ist, entlang der Steuerbohrung bewegt werden kann.

Eine Ausgestaltung ist es, dass ein Ende des Stößels als Schieber ausgeführt ist, der den Zulauf von Rücklauf und Verbraucheranschluss trennt.

Dabei ist vorzugsweise der Schieber derart ausgeführt, dass er möglichst genau und gleichzeitig bewegbar in die Steuerbohrung des Stößels passt. Diese Passform des Stößels kann für eine bestimmte Stößellänge vorgesehen sein, die insbesondere dadurch bemessen wird, dass bei Bewegung des Stößels (über Stift und Anker) bei Anliegen eines elektrischen Stroms an der Spule der Schieber öffnet, d.h. die beschriebene Passform aus der Steuerbohrung in Richtung des Zulaufs geschoben wird und das Fluid, das über Druck an dem Zulauf anliegt, an der Passform des Stößels vorbei in die Steuerbohrung eintreten kann. Dabei ist der Stößel vorzugsweise derart ausgeführt, dass das Fluid von dem Zulauf zu dem Verbraucheranschluss und zu dem Rücklauf fließen kann.

So ist es eine Weiterbildung, dass der Stößel derart ausgestaltet ist, dass entlang einer ihn umgebenden Steuerbohrung zumindest teilweise ein Fluid fließen kann. Dadurch wird es möglich, dass bei geöffnetem Schieber durch die Steuerbohrung, in der sich der Stößel befindet, das Fluid vom Zulauf zum Verbraucheranschluss bzw. Rücklauf fließen kann. Dies kann beispielsweise dadurch erreicht werden, dass der Stößel zumindest über einen Teil seiner Länge mindestens eine Stößel-Nut aufweist. Eine derartige Nut kann beispielsweise eckig, rund oder sowohl eckig als auch rund ausgeführt sein. Weiterhin kann der Stößel mehrere Aussparungen, sowohl eckig als auch rund aufweisen, die mehrere Stößel-Nuten darstellen.

Eine Weiterbildung besteht darin, dass das Fluid durch einen Hohlraum innerhalb des Stößels vom Zulauf zum Verbraucheranschluss bzw. zum Rücklauf fließt. Ein solcher Hohlraum kann beispielsweise nach dem Schieber vorgesehen sein und in vorgegebenen Abständen Nuten oder Bohrungen aufweisen, die den Stößel in Querrichtung zum Hohlraum durchdringen und somit den Fluidfluss z.B. aus dem Hohlraum heraus, insbesondere zum Verbraucheranschluss bzw. zum Rücklauf hin ermöglichen.

Eine andere Möglichkeit den Fluidfluss durch bzw. entlang des Stößels bei geöffnetem Schieber vorzusehen ist es, eine gewindeförmige Rundnut insbesondere an der Außenseite des Stößels im Anschluss an den Schieber vorzusehen, so dass entlang dieser gewindeförmigen Rundnut das Fluid vom Zulauf zum Verbraucheranschluss bzw. zum Rücklauf fließen kann.

Eine andere Weiterbildung besteht darin, dass eine Feder vorgesehen ist, die den Stößel in Richtung des Stifts drückt. Dies bewirkt, dass in der inaktiven Stellung, also ohne dass Strom durch die Spule fließt und den Anker bewegt, der Schieber geschlossen ist und damit der Fluidfluss vom Zulauf zum Verbraucheranschluss bzw. Rücklauf (vorzugsweise vollständig) abgeschnitten ist.

Eine Weiterbildung besteht darin, dass der Stößel eine Stößel-Blende aufweist. Sobald der Schieber öffnet fließt das Fluid durch diese Stößel-Blende von dem Zulauf in Richtung des Verbraucheranschluss und in Richtung des Rücklaufs. Bevorzugt wird die Funktion der Stößel-Blende realisiert durch eine verlängerte Nut entlang des Stößels oder durch eine Querbohrung durch den Stößel. Im Falle der Querbohrung weist insbesondere der Stößel in seinem Innenraum eine Bohrung auf, so dass das Fluid durch die Querbohrung durch den Stößel hindurch fließen kann. Weiterhin kann solch ein Stößel Stichnuten oder weitere Querbohrungen umfassen, so dass an bestimmten Stellen entlang des Stößels das Fluid durch die Bohrung nach außen fließen kann.

Als eine alternative Ausführungsform könnte die Blende auch im Sitzteil ausgeführt sein.

Eine zusätzliche Weiterbildung besteht darin, dass im Magnetteil des Druckregelventils eine Feder vorgesehen ist, anhand der eine Federkraft auf den Anker ausgeübt wird. Dabei kann die Feder zwischen dem Gehäuse und dem Anker und/oder dem Stift ausgeführt sein, wobei vorzugsweise Anker und Stift über einen Presssitz miteinander verbunden sind. Durch die beschriebene Feder wird die Druckkraft, die über den Zulauf auf den Stößel wirkt, kompensiert. Damit steht nahezu die gesamte Magnetkraft für die Druckregelung zur Verfügung.

Auch ist es eine Ausgestaltung, dass ein zusätzlicher Kanal zwischen Zulauf und Verbraucheranschluss insbesondere in dem Ventilteil des Druckregelventils vorgesehen ist, der mittels des Schiebers im wesentlichen verschließbar ist. Ein solcher Kanal kann die Ausgestaltung einer Stößel-Nut oder einer anderen Rückflussmöglichkeit zwischen Steuerbohrung und Stößel einsparen. Öffnet der Schieber, wird eine Verbindung zwischen Zulauf und Verbraucheranschluss sowie Zulauf und Rücklauf vor dem Sitzventil in die Steuerbohrung hergestellt.

Eine andere Weiterbildung besteht darin, dass über die Steuerung des Sitzventils anhand des elektrischen Stroms, der durch die Spule fließt, der Druck an dem Verbraucheranschluss über einen zumindest teilweise im wesentlichen linearen Bereich regelbar ist.

Auch ist es eine Weiterbildung, dass das Magnetteil einen Spulenkern umfasst, der zumindest teilweise als in die Spule eintauchend ausgeführt ist.

Ferner ist es eine Weiterbildung, dass der Schieber im Zulauf des Ventilteils vorgesehen ist.

Eine Ausgestaltung besteht darin, dass das Sitzventil im Rücklauf des Ventilteils vorgesehen ist.

Ausführungsbeispiele der Erfindung werden nachfolgend anhand der Zeichnungen dargestellt und erläutert.

Es zeigen:
- **Fig.1**: ein elektromagnetisches Druckregelventil im Längsschnitt;
- **Fig.2A**: eine Stößelquerschnittsform mit drei eckigen Aussparungen;
- **Fig.2B**: eine Stößelquerschnittsform mit vier eckigen Aussparungen;
- **Fig.2C**: eine Stößelquerschnittsform mit einer schraubenförmigen umlaufenden Nut;
- **Fig.2D**: eine Stößelquerschnittsform mit einem Hohlraum und seitlichen Öffnungen;
- **Fig.2E**: eine Stößelquerschnittsform mit runden Aussparungen;
- **Fig.3**: eine alternative Ausführungsform eines Druckregelventils mit einem veränderten Verbraucheranschluss;
- **Fig.4**: eine alternative Ausführungsform eines Druckregelventils mit einer Ankerfeder und einer Stößel-Blende;
- **Fig.5A**: eine Stößelquerschnittsform mit einem Hohlraum, seitlichen Öffnungen und einer Stößel-Blende;
- **Fig.5B**: eine Stößelquerschnittsform mit eckigen Aussparungen, wobei eine Aussparung gegenüber den anderen Aussparungen länger ausgeführt ist;
- **Fig.5C**: eine Stößelquerschnittsform mit einem Hohlraum, Querbohrungen und integrierter Stößel-Blende;
- **Fig.6**: ein Anschlussteil mit einem Stößel.

In **Fig.1** ist ein elektromagnetisches Druckregelventil 100 mit einem Magnetteil 110 und einem Ventilteil 120 dargestellt. Das Magnetteil ist von einem Gehäuse 115 umgeben und umfasst eine auf einem Spulenkörper 117 angebrachte Spule 111, die wiederum von einem Spulengehäuse 118 umgeben ist. Die Stromversorgung der Spule 111 erfolgt über einen elektrischen Anschluss wie beispielsweise eine Steckverbindung 113 und weitere Leitungen, die vorliegend nicht dargestellt sind.

Das Innere der Spule 111 umfasst ferner ein Innengehäuse 116, in dem ein Anker 112 und ein Spulenkern 114 vorgesehen sind, wobei der Spulenkern 114 an dem dem Ventilteil 120 zugewandten Ende des Magnetteils 110 angeordnet ist und teilweise in das Innere der Spule 111 eintaucht. Der Spulenkern 114 weist in seinem Inneren eine axiale Bohrung mit Bereichen verschiedenen Durchmessers auf.

Zwischen Gehäuse 115 und Spulenkörper 117 ist um das Innengehäuse 116 eine Polplatte 119 angebracht, um den magnetischen Fluss zum Anker 112 innerhalb des Druckregelventils 100 zu gewährleisten.

Der Anker 112 weist an seiner in Richtung des Spulenkerns 114 ausgerichteten Seite einen Vorsprung 160 auf, der auf eine Ausformung 161 des Spulenkerns 114 abgestimmt ist, so dass der Anker 112 über einen vorgegebenen Bereich in den Spulenkern 114 eintauchen kann. Zwischen Anker 112 und Spulenkern 114 existiert ein Arbeitsspalt 163.

Entlang seiner Längsachse weist der Anker 112 eine Längsbohrung 162 auf, mit einem in Richtung der vom Ventilteil 120 abgewandten Seite in etwa ab der Mitte des Ankers 112 geringfügig größeren Durchmesser.

Entlang seiner Längsbohrung 162 mit geringerem Durchmesser umfasst der Anker 112 einen Stift 131, der in den Anker 112 eingepresst ist und damit mit diesem derart in Wirkverbindung steht, dass er zusammen mit dem Anker 112 bewegbar ist.

Fließt kein Strom durch die Spule 111, so befindet sich der Anker 112 in der Ruhestellung wie in Fig.1 gezeigt.

Das Ventilteil 120 umfasst insbesondere einen Zulauf 121, der mit einer Pumpe (nicht dargestellt) in Verbindung steht, einen Rücklauf 122, der vorzugsweise als Ringkanal ausgeführt ist und das Fluid einem Reservoir (nicht dargestellt) zuleitet und einen Verbraucheranschluss 123, der beispielsweise als Stichkanal ausgeführt ist und z.B. mit einem hydraulischen Aktuator (nicht dargestellt) verbunden ist. Über den Anker 112 wird ein Ventilelement 130 betätigt.

Der Spulenkern 114 umfasst in Richtung des Ventilteils 120 in dem Bereich, in dem er aus der Spule 111 herausragt, den Rücklauf 122 in Form eines Stichkanals. Das Innere des Spulenkerns 114 weist in dem aus der Spule 111 herausragenden Ende seiner Bohrung einen Bereich größeren Durchmessers auf und nimmt zumindest teilweise ein eingepresstes Anschlussteil 165 auf.

Das Anschlussteil 165 umfasst eine Steuerbohrung 138 zur Aufnahme eines Stößels 132, der mit dem Sitzventil 133 in Wirkverbindung derart steht, dass er über die Bewegung des Ankers 112 und damit des Stifts 131 in der Steuerbohrung 138 bewegbar ist. Ferner weist das Anschlussteil 165 auf der dem Magnetteil 110 zugewandten Seite eine Steuerbohrung 141 für das Sitzventil 133 auf. Auf der dem Magnetteil 110 abgewandten Seite weist das Anschlussteil 165 eine Bohrung auf, in die eine Kappe 166 derart eingepresst ist, dass eine Feder 135 durch Abstützung auf die Innenseite der Kappe 166 auf den Stößel 132 in der Steuerbohrung 138 drückt. Der Stößel 132 weist auf seiner dem Magnetteil abgewandten Seite eine Verbreiterung auf, die bündig mit der Steuerbohrung 138 abschließt und als Schieber 134 fungiert. Diese Verbreiterung betrifft nur das Ende des Stößels 132 und ist vorzugsweise so ausgeführt, dass - sofern die Verbreiterung, also der Schieber 134, in die Steuerbohrung 138 eingeführt ist - nahezu kein Fluid von dem Zulauf 121 zu dem Rücklauf 122 bzw. von dem Zulauf 121 zu dem Verbraucheranschluss 123 fließen kann. Wird der Schieber 134 in Richtung von dem Magnetteil weg bewegt und verlässt die Verbreiterung des Schiebers 134 die Steuerbohrung 138, so wird durch mindestens eine Nut 136 entlang des Stößels unterhalb des Schiebers 134 in Richtung des Magnetteils 110 ein Fluidfluss möglich von dem Zulauf 121 zum Verbraucheranschluss 123 bzw. von dem Zulauf 121 zu dem Rücklauf 122. Das Sitzventil 133 drosselt den Fluidfluss von dem Zulauf 121 zu dem Rücklauf 122 mit wachsendem elektrischen Strom durch die Spule 111, dadurch dass sich der Anker 112 und damit der Stift 131 in Richtung zum Ventilteil 120 bewegt und so das Sitzventil 133 schließt und damit den Druck auf den Verbraucheranschluss 123 erhöht.

Weiterhin umfasst das Anschlussteil 165 eine Stichbohrung zu dem Verbraucheranschluss 123. Eine Abschlussgeometrie 164, z.B. ein Einbauraum als Bestandteil eines Getriebeblockes, umfasst das Anschlussteil 165 und stellt mittels mindestens einer Stichbohrung den Verbraucheranschluss 123 und mittels einer Bohrung den Zulauf 121 her. Die Zuführung des Fluids in die Kappe 166 wird durch mindestens eine Öffnung 124 hergestellt.

Der Stift 131 weist an seinem mit dem Rücklauf 122 in Verbindung stehenden Bereich eine Querbohrung 140 auf, die in eine Bohrung 139 des Stifts 131 mündet, wobei die Bohrung 139 von der dem Ventilteil 120 abgewandten Seite durch den Stift 131 hindurch bis zur Höhe der Querbohrung 140 verläuft und dort die Querbohrung 140 mit der Bohrung 139 verbindet. Somit kann das Fluid von dem Rücklauf 122 durch die Querbohrung 140 und weiter durch die Bohrung 139 durch das Innere des Stifts 131 hindurch fließen bis das Fluid den Stift 131 auf der dem Magnetteil 110 zugewandten Unterseite verlässt und in die Längsbohrung 162 des Ankers 112 mündet. Von dort aus kann das Fluid weiter durch mindestens eine Anker-Nut 137 in den Arbeitsspalt 163 fließen. Somit ist bevorzugt während des Betriebs des elektromagnetischen Druckregelventils 100 der gesamte freie Innenraum mit dem Fluid, insbesondere einem Öl, z.B. einem Getriebeöl, gefüllt. Die Beweglichkeit des Ankers 112 in dem Arbeitsspalt 163 ist dadurch gewährleistet, dass insbesondere die mindestens eine Anker-Nut 137 eine Verdrängung des Fluids in das Innere des Ankers 112 und von dort durch das Innere des Stifts 131 in Richtung des Zulaufs 121 ermöglicht. Es sei angemerkt, dass in Fig.1 zumindest zwei solche Anker-Nuten 137 eingezeichnet sind. Je nach Dimensionierung können eine einzelne Stift-Nut oder eine Vielzahl solcher Stift-Nuten unterschiedlicher Form vorgesehen sein.

### Funktionsweise des Druckregelventils:

In Fig. 1 ist der Ruhezustand dargestellt, an der Spule 111 liegt kein Strom an. In diesem Fall ist der Anker 112 in der gezeigten Stellung, der Arbeitsspalt 163 offen, das Sitzventil 133 maximal geöffnet und der Schieber 134 verschließt die Steuerbohrung 138. Dabei tritt nur minimale Leckage von dem Zulauf 121 an dem Schieber 134 vorbei auf. Das Fluid drückt über den Zulauf 121 gegen den Schieber 134, gleichzeitig stellt die Feder 135 sicher, dass sich der Ventilteil einschließlich Schieber in der Grundstellung - wie beschrieben - befindet. Für den Fall, dass der Zulauf 121 stetig unter Druck steht, kann die Feder 135 entfallen.

Steht die Spule 111 unter Strom wird zunächst der Anker 112 aus der beschriebenen Grundstellung in Richtung Ventilteil 120 bewegt. Grundsätzlich wird die maximale Auslenkung des Ankers 112 durch die Sitzöffnung bestimmt bzw. begrenzt. Zunächst wird über den Stift 131 der Stößel 132 in Richtung der Kappe 166 gedrückt. So drückt der Schieber 134 gegen die Feder 135 und öffnet die Verbindung zwischen Zulauf 121 und Verbraucheranschluss 123 sowie zwischen Zulauf 121 und Rücklauf 122. Direkt hinter dem Schieber 134 (in Richtung des Magnetteils) befindet sich die beschriebene mindestens eine Stößel-Nut 136, die das Fluid von dem Zulauf 121 zum Verbraucheranschluss 123 und - da das Sitzventil 133 noch geöffnet ist - auch zum Rücklauf 122 leitet. Nachdem der Schieber 134 geöffnet ist, befindet sich das Druckregelventil 100 zumindest teilweise in einem linearen Regelbereich, bei dem abhängig von einer weiteren Erhöhung des elektrischen Stroms durch die Spule 111 der Druck auf den Verbraucheranschluss 123 regelbar ist. So wird bei Erhöhung der elektrischen Stromstärke in der Spule 111 der Anker 112 weiter in Richtung des Ventilteils 120 bewegt, es setzt über den Stift 131 an dem Sitzventil 133 über die Steuerbohrung 141 eine Drosselfunktion ein, d.h. das Sitzventil 133 wird mit ansteigender Stromstärke langsam geschlossen. Dies bewirkt, dass das Fluid in zunehmend geringerem Maße von dem Zulauf 121 zu dem Rücklauf 122 fließen kann, dafür aber verstärkt vom Zulauf 121 zum Verbraucheranschluss 123 fließt. Damit erhöht sich der Druck im Verbraucheranschluss 123.

Die Kappe 166 ist vorzugsweise z.B. mittels (nur) einer Bohrung derart ausgeführt, dass sie gleichzeitig als eine Blende wirkt.

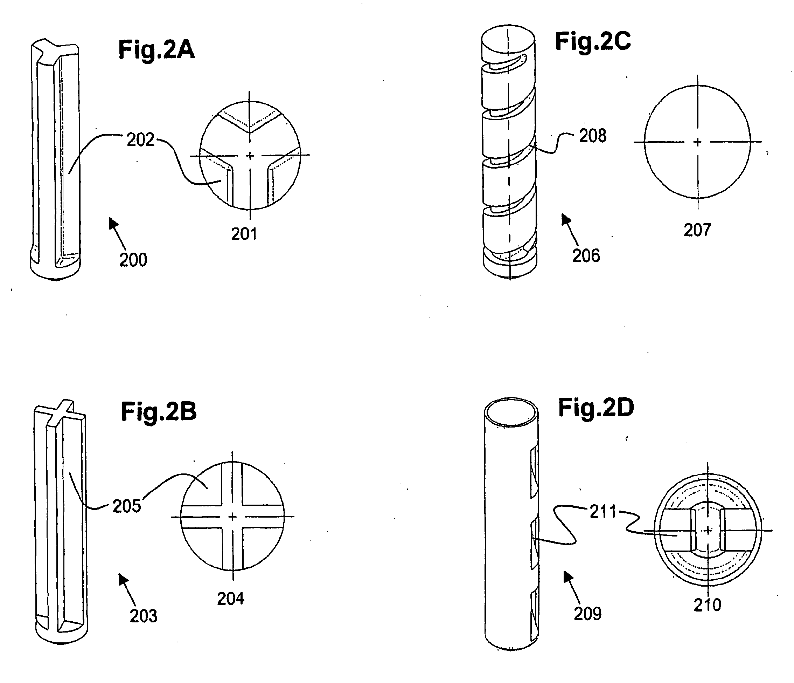

Die Figuren 2A bis 2E zeigen unterschiedliche Möglichkeiten, den Stößel 132 aus Figur 1 auszugestalten und anhand verschiedener Stößel-Nuten 136 den Fluidfluss von dem Zulauf sowohl zum Verbraucheranschluss 123 als auch zum Rückfluss 122 zu gewährleisten.

**Fig.2A** zeigt den Schnitt durch einen Stößel 200, der mehrere Nuten 202 und eine Kernform gemäß dem Schnittbild 201 aufweist. Mittels dieser Kernform ist eine stabile Bewegung des Stößels 200 innerhalb der Steuerbohrung 138 (siehe Fig.1) gewährleistet.

Entsprechend zeigt **Fig.2B** einen Stößel 203, der mehrere eckige Nuten 205 und eine kreuzförmige Kernform gemäß Schnittbild 204 aufweist.

**Fig.2C** zeigt einen Stößel 206 mit einer schraubenförmig umlaufenden Nut 208.

In **Fig.2D** ist ein Stößel 209 dargestellt, der eine axiale Bohrung durch sein Inneres und in bestimmten Abständen Stichnuten 211 aufweist. Der Schnitt durch den Stößel 209 ist anhand des Schnittbilds 210 dargestellt.

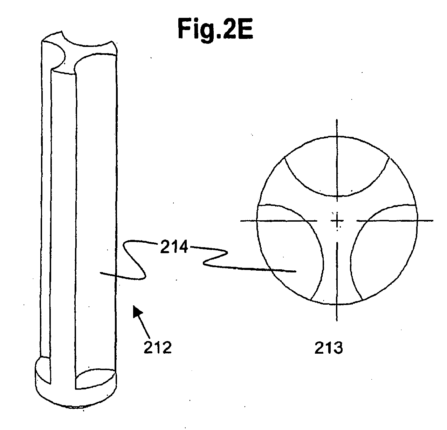

**Fig.2E** zeigt einen Stößel 212 mit mehreren abgerundeten Nuten 214, die gemäß Schnittbild 213 angeordnet sind.

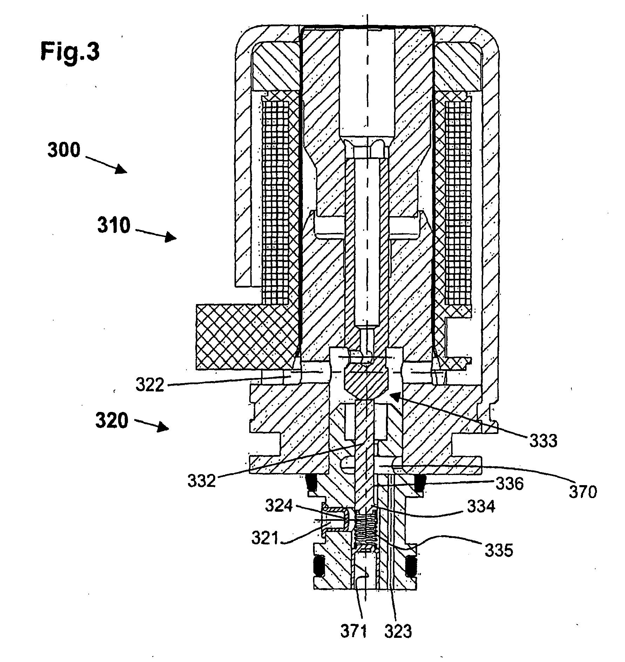

**Fig.3** zeigt ein Druckregelventil 300 mit einem mit einer gesonderten Druckmittelführung. Das Druckregelventil 300 entspricht im Hinblick auf das Magnetteil 310 im wesentlichen dem Druckregelventil 100. Nachfolgend werden insbesondere die Unterschiede zum Druckregelventil 100 aus Fig.1 näher erläutert.

Das Druckregelventil 300 umfasst einen Zulauf 321, der über eine Zulaufblende 324 in das Ventilteil 320 eintritt. Eine Feder 335 wird durch ein Befestigungselement 371 gehalten und drückt gegen einen Schieber 334 eines Stößels 332. Hinter dem Schieber 334 weist der Stößel 332 eine Stößel-Nut 336 auf. Ein Kanal 370 stellt die Verbindung zwischen der Stößel-Nut 336 und dem Verbraucheranschluss 332 her. Der Kanal 370 ist vorzugsweise als eine Querbohrung ausgeführt. Weiterhin ist eine Verbindung zwischen Kanal 370 und einem Rücklauf 322 des Druckregelventils 300 vorhanden.

Fließt entsprechend der Beschreibung zu Fig.1 ein Strom durch die Spule, so wird der Stößel 332 gegen die Feder 335 gedrückt, der Schieber 334 öffnet und Fluid fließt durch die Zulaufblende 324 in die Stößel-Nut 336, und weiter durch den Kanal 370 zum Verbraucheranschluss 323. Zusätzlich fließt ein Teil des Fluids weiter durch die Stößel-Nut 336 zum Rücklauf 322. Wird der Strom durch die Spule weiter erhöht, schließt sich allmählich ein Sitzventil 333, es kann nur noch reduziert Fluid vom Zulauf 321 zum Rücklauf 322 fließen und der Druck im Verbraucheranschluss 323 erhöht sich.

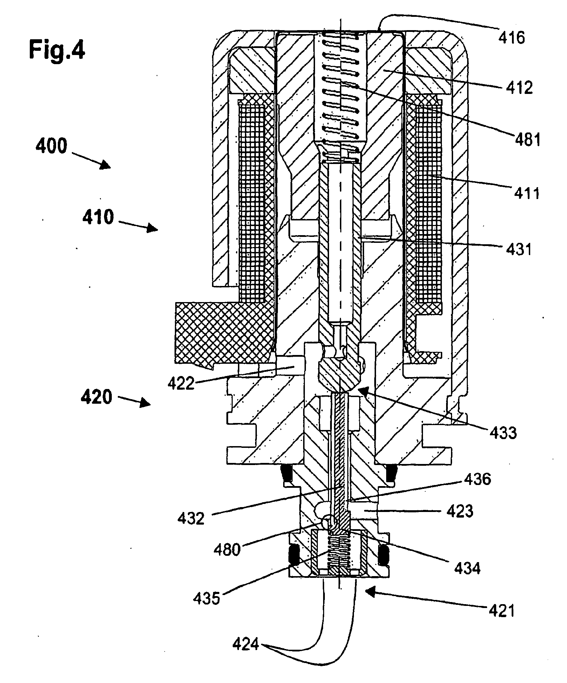

**Fig.4** zeigt eine alternative Ausführungsform eines Druckregelventils 400. Das Druckregelventil 400 umfasst einen Magnetteil 410 und einen Ventilteil 420. Der Magnetteil umfasst insbesondere eine Anker-Feder 481, die zwischen Innengehäuse 416 und Stift 431 vorgesehen ist und einen bestimmten Druck auf den verschiebbaren Anker 412 ausübt, so dass dieser insbesondere leichter aus der Ruhestellung (ohne dass Strom durch die Spule 411 fließt) bewegt werden kann. Ein Vorteil der Anker-Feder 481 besteht darin, dass die Druckkraft, die über den Zulauf auf den Stößel wirkt, vorzugsweise vollständig kompensiert wird.

Das Druckregelventil umfasst weiterhin einen Rücklauf 422, einen Zulauf 421 und einen Verbraucheranschluss 423. Der Zulauf 421 fließt über zwei Öffnungen 424. Eine Feder 435 drückt im Ruhezustand (also ohne dass Strom durch die Spule 411 fließt) gegen einen Schieber 434, der im den Zulauf 421 im wesentlichen von Verbraucheranschluss 423 und Rücklauf 422 trennt. Der Schieber 434 stellt das abschließende Ende eines Stößels 432 dar, welcher Stößel bevorzugt Nuten 436 aufweist, die - bei geöffnetem Schieber 434 - einen Fluidfluss von Zulauf 421 zum Verbraucheranschluss 423 und zum Rücklauf 422 ermöglichen. Eine Stößel-Blende 480 ist an einer Stelle des Stößels 432 ausgeführt als eine gegenüber den anderen Nuten verlängerte Nut, so dass unmittelbar nach dem Öffnen des Schiebers 434 durch diese Stößel-Blende 480 das Fluid vom Zulauf 421 zum Verbraucheranschluss 423 (und zum Rücklauf 422) fließen kann.

Im Folgenden werden näher mögliche Ausführungsformen für einen Stößel 432 beschrieben, der gemäß Fig.4 eine Stößel-Blende 480 umfasst.

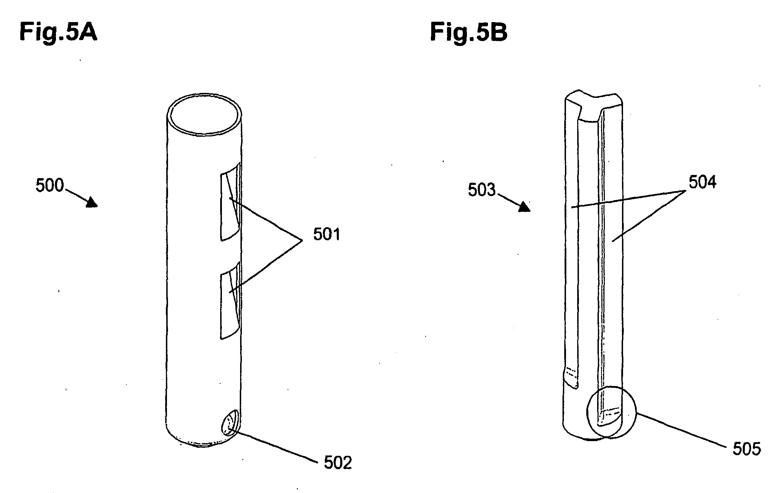

**Fig.5A** zeigt einen Stößel 500 vergleichbar mit dem Stößel 209 aus Fig.2D. Der Stößel 500 umfasst Stichnuten 501 und zusätzlich eine Stößel-Blende 502 an seinem unteren Ende, direkt oberhalb des Schiebers. Wird, wie eingangs beschrieben, der Stößel 500 nach unten geschoben, so kann durch diese Stößel-Blende 502 das Fluid vom Zulauf zum Verbraucheranschluss und zum Rücklauf fließen.

Ein vergleichbares Prinzip zeigt ein Stößel 503 gemäß **Fig.5B.** Hier sind mehrere Nuten 504 vorhanden, wobei eine Nut in der Nähe des Schiebers tiefer ausgeführt ist. Dies ermöglicht die Funktion einer Stößel-Blende 505 gemäß den obigen Ausführungen.

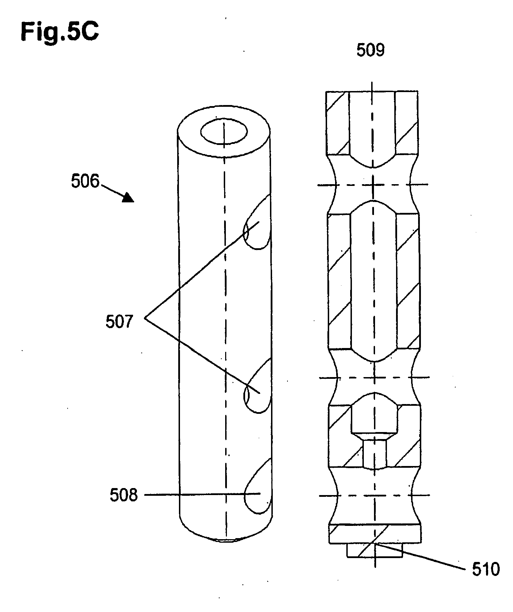

**Fig.5C** zeigt einen Stößel 506 mit mehreren Querbohrungen 507 und einer Stößel-Blende 508 in der Nähe des Schiebers 510 gemäß oben beschriebenem Prinzip. Das Schnittbild 509 zeigt den Verlauf der Kanäle durch den Stößel.

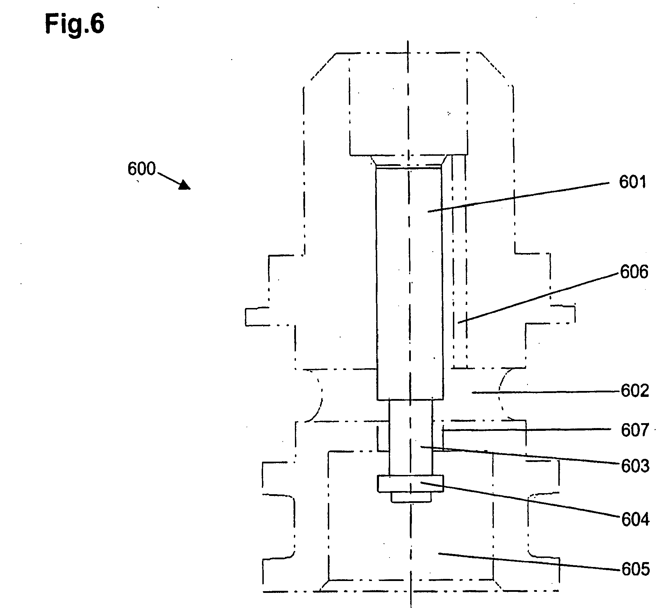

**Fig.6** zeigt ein Anschlussteil 600 mit einem Stößel 601. Der Stößel 601 kann dabei (nicht dargestellt) auch nach oben verlängert ausgeführt sein. Über einen Zulauf 605 wird das Fluid zu einem Verbraucheranschluss 602 und zu einem Rücklauf (nicht dargestellt) geleitet. Der Stößel 601 weist in seinem unteren Teil eine Ausnehmung 603 auf, die insbesondere als ein Abschnitt geringeren Durchmessers ausgeführt ist. Vorzugsweise ist die Ausnehmung 603 als eine Eindrehung (Einstich) ausgeführt, so dass der Stößel 601 an dieser Stelle in Verbindung mit der Bohrung 607 einen Ringspalt ergibt, welcher Ringspalt einer Blende zwischen Zulauf 605 und Verbraucheranschluss 602 entspricht. Am unteren Ende des Stößels 601 ist ein Schieber 604 vorgesehen, der die Bohrung 605 vorzugsweise vollständig verschließen kann.

Wird der Stößel 601 durch den Elektromagneten (nicht in Fig.6 dargestellt) in Richtung Zulauf 605 betätigt, so ermöglicht der Schieber 604 einen Fluidfluss dadurch, dass er die Bohrung 607 verlässt. Das Fluid fließt vom Zulauf 605 zum Verbraucheranschluss 602 und über einen Kanal 606, der als Ausnehmung vorzugsweise in Form einer Bohrung oder Nut ausgeführt sein kann, weiter zum Rücklauf. Der Fluss zum Rücklauf ist durch ein Sitzventil regelbar derart, dass sich die Stärke des Fluidflusses vom Zulauf 605 zum Verbraucheranschluss 602 über das Sitzventil einstellen lässt.

### Literaturverzeichnis:

- [1]: EP 1 004 066

### Bezugszeichenliste:

- 100:: Druckregelventil
- 110:: Magnetteil
- 111:: Spule
- 112:: verschiebbarer Anker
- 113:: Steckverbindung
- 114:: Spulenkern
- 115:: Gehäuse
- 116:: Innengehäuse
- 117:: Spulenkörper
- 118:: Spulengehäuse
- 119:: Polplatte
- 120:: Ventilteil
- 121:: Zulauf
- 122:: Rücklauf
- 123:: Verbraucheranschluss
- 124:: Öffnung
- 130:: Ventilelement
- 131:: Stift
- 132:: Stößel
- 133:: Sitzventil
- 134:: Schieber
- 135:: Feder
- 136:: Stößel-Nut
- 137:: Anker-Nut
- 138:: Steuerbohrung
- 139:: Bohrung
- 140:: Querbohrung
- 141:: Steuerbohrung
- 160:: Vorsprung
- 161:: Ausformung
- 162:: Längsbohrung
- 163:: Arbeitsspalt
- 164:: Abschlußgeometrie
- 165:: Anschlussteil
- 166:: Kappe

- 200:: Stößel
- 201:: Schnittbild
- 202:: Nut
- 203:: Stößel
- 204:: Schnittbild
- 205:: Nut
- 206:: Stößel
- 207:: Schnittbild
- 208:: Nut
- 209:: Stößel
- 210:: Schnittbild
- 211:: Stichnut
- 212:: Stößel
- 213:: Schnittbild
- 214:: Nut

- 300:: Druckregelventil
- 310:: Magnetteil
- 320:: Ventilteil
- 321:: Zulauf
- 322:: Rücklauf
- 323:: Verbraucheranschluss
- 324:: Zulaufblende
- 332:: Stößel
- 333:: Sitzventil
- 334:: Schieber
- 335:: Feder
- 336:: Stößel-Nut
- 370:: Kanal
- 371:: Befestigungselement

- 400:: Druckregelventil
- 410:: Magnetteil
- 411:: Spule
- 412:: Anker
- 416:: Innengehäuse
- 420:: Ventilteil
- 421:: Zulauf
- 422:: Rücklauf
- 423:: Verbraucheranschluss
- 424:: Öffnung
- 431:: Stift
- 432:: Stößel
- 433:: Sitzventil
- 434:: Schieber
- 435:: Feder
- 436:: Stößel-Nut
- 480:: Stößel-Blende
- 481:: Anker-Feder

- 500:: Stößel
- 501:: Nut (Stichnut)
- 502:: Stößel-Blende
- 503:: Stößel
- 504:: Nut
- 505:: Stößel-Blende
- 506:: Stößel
- 507:: Querbohrung
- 508:: Stößel-Blende
- 509:: Schnittbild
- 510:: Schieber

- 600:: Anschlussteil
- 601:: Stößel
- 602:: Verbraucheranschluss
- 603:: Ausnehmung
- 604:: Schieber
- 605:: Zulauf
- 606:: Kanal
- 607:: Bohrung

## Patentansprüche

1. Druckregelventil (100) zur Druckregelung eines Fluides
mit einem Magnetteil (110) umfassend mindestens eine elektrische Spule (111) und einen verschiebbaren Anker (112),
mit einem Ventilteil (120) umfassend einen Zulauf (121), einen Rücklauf (122), einen Verbraucheranschluss (123) und ein mit dem Anker (112) zusammenwirkendes Ventilelement (130),
wobei das Ventilelement (130) einen Schieber (134) und Sitzventil (133) sowie einen Stift (131), der mit dem Anker (112) in direkter Wirkverbindung steht, umfasst und bei dem das Sitzventil (133) als ein erstes Schließglied ausgestaltet ist, das bei steigender Bestromung schließt,
und der Schieber (134) an einem Stössel (132) als zweites Schließglied ausgestaltet ist,
wobei entweder der Stössel (132) mit mindestens einer Nut (136, 202, 205, 208, 211, 214) für das Fluid gegeben ist
oder in dem Druckventil (100) mindestens ein Kanal (606), der als Ausnehmung ausgeführt ist, über den das Fluid vom Verbraucheranschluss (123) zum Rücklauf (122) fliesst, gegeben ist.

2. Druckregelventil nach Anspruch 1, bei dem der Stift (131) eine Ausnehmung, insbesondere eine Bohrung (139) und/oder eine Querbohrung (140) umfasst, durch die ein Fluid in das Innere des Magnetteils (110) fliesst.

3. Druckregelventil nach einem der vorhergehenden Ansprüche, bei dem der Stift (131) oder Anker (112) Mittel zur Fluidführung (137) aufweist, so dass insbesondere der Anker (112) in dem Spulengehäuse (118) verschiebbar ist.

4. Druckregelventil nach Anspruch 3, bei dem das Mittel zur Fluidführung eine Stiftnut (137) an der Aussenseite des Stifts (131) ist.

5. Druckregelventil nach einem der vorhergehenden Ansprüche, bei dem das Ventilelement (130) den über den Stift (131) betätigbaren Stössel (132) umfasst.

6. Druckregelventil nach einem der Ansprüche 1 bis 5, bei dem der Stössel (132) derart ausgestaltet ist, dass entlang einer ihn umgebenden Steuerbohrung (138) zumindest teilweise ein Fluid fliessen kann.

7. Druckregelventil nach einem der vorhergehenden Ansprüche, bei dem die Stössel-Nut (136, 202, 205, 208, 211, 214) eckig oder rund ausgestaltet ist.

8. Druckregelventil nach Anspruch 6, bei dem das Fluid durch einen Hohlraum innerhalb des Stössels (132, 200, 203, 206, 209, 212) fliesst.

9. Druckregelventil nach Anspruch 6, bei dem das Fluid durch eine gewindeförmige Rundnut (208) des Stössels (132, 206) fliesst.

10. Druckregelventil nach einem der Ansprüche 6 bis 9, bei dem eine Feder (135) vorgesehen ist, die den Stössel (132) in Richtung des Stifts (131) drückt.

11. Druckregelventil nach einem der Ansprüche 6 bis 10, bei dem der Stössel (132, 432) eine Stössel-Blende (480, 502, 505, 508) aufweist.

12. Druckregelventil nach Anspruch 11, bei dem die Stössel-Blende (480, 502, 505, 508) eine verlängerte Nut oder eine Querbohrung umfasst.

13. Druckregelventil nach einem der vorhergehenden Ansprüche, bei dem im Magnetteil eine Feder (481) vorgesehen ist, anhand der eine Federkraft auf den Anker (112, 412) ausgeübt wird.

14. Druckregelventil nach Anspruch 13, bei dem die Feder (481) zwischen einem Innengehäuse (416) und dem Anker (112, 412) ausgeführt ist.

15. Druckregelventil nach Anspruch 13, bei dem die Feder (481) zwischen einem Innengehäuse (416) und dem Stift (131, 431) ausgeführt ist.

16. Druckregelventil nach einem der vorhergehenden Ansprüche, bei dem ein zusätzlicher Kanal zwischen dem Zulauf (121) und dem Verbraucheranschluss (123) vorgesehen ist, der mittels des Schiebers (134) im wesentlichen verschliessbar ist.

17. Druckregelventil nach einem der vorhergehenden Ansprüche, bei dem über die Steuerung des Sitzventils (133) anhand des elektrischen Stroms, der durch die Spule (111) fliesst, der Druck an dem Verbraucheranschluss (123) über einen zumindest teilweise im wesentlichen linearen Bereich regelbar ist.

18. Druckregelventil nach einem der vorhergehenden Ansprüche, bei dem das Magnetteil (110) einen Spulenkern (114) umfasst, der zumindest teilweise als in die Spule (111) eintauchend ausgeführt ist.

19. Druckregelventil nach einem der vorhergehenden Ansprüche, bei dem der Schieber (134) im Zulauf (121) des Ventilteils (120) vorgesehen ist.

20. Druckregelventil nach einem der vorhergehenden Ansprüche, bei dem das Sitzventil (133) im Rücklauf (122) des Ventilteils (120) vorgesehen ist.

## Claims

1. Pressure control valve (100) for controlling the pressure of a fluid
with a magnetic part (110), comprising at least an electric coil (111) and a movable armature (112),
with a valve part (120), comprising an inlet (121), a return (122), a consumer connection (123) and a valve element (130) interacting with the armature (112),
the valve element (130) comprising a slide valve (134) and a seat valve (133) as well as a pin (131), which has a direct active connection to the armature (112), and in which the seat valve (133) is formed as a first closing member, which closes as the current feed increases,
and the slide valve (134) is formed on a plunger (132) as a second closing member,
wherein either the plunger (132) is provided with at least one groove (136, 202, 205, 208, 211, 214) for the fluid
or in the pressure valve (100) at least one
channel (606) is provided, which is executed as a recess, via which the fluid flows from the consumer connection (123) to the return (122).

2. Pressure control valve according to claim 1, in which the pin (131) comprises a recess, in particular a hole (139) and/or a cross hole (140), through which a fluid flows into the interior of the magnetic part (110).

3. Pressure control valve according to one of the preceding claims, in which the pin (131) or armature (112) has means for guiding the fluid (137), so that in particular the armature (112) is movable in the coil housing (118).

4. Pressure control valve according to claim 3, in which the means for guiding the fluid is a pin groove (137) on the outside of the pin (131).

5. Pressure control valve according to one of the preceding claims, in which the valve element (130) comprises the plunger (132) actuatable via the pin (131).

6. Pressure control valve according to one of claims 1 to 5, in which the plunger (132) is formed such that along a control hole (138) surrounding it a fluid can flow at least partially.

7. Pressure control valve according to one of the preceding claims, in which the plunger groove (136, 202, 205, 208, 211, 214) is formed to be cornered or round.

8. Pressure control valve according to claim 6, in which the fluid flows through a cavity inside the plunger (132, 200, 203, 206, 209, 212).

9. Pressure control valve according to claim 6, in which the fluid flows through a thread-shaped circular groove (208) in the plunger (132, 206).

10. Pressure control valve according to one of claims 6 to 9, in which a spring (135) is provided, which presses the plunger (132) in the direction of the pin (131).

11. Pressure control valve according to one of claims 6 to 10, in which the plunger (132, 432) has a plunger aperture (480, 502, 505, 508).

12. Pressure control valve according to claim 11, in which the plunger aperture (480, 502, 505, 508) comprises an extended groove or a cross hole.

13. Pressure control valve according to one of the preceding claims, in which a spring (481) is provided in the magnetic part, by means of which spring a spring force is exerted on the armature (112, 412).

14. Pressure control valve according to claim 13, in which the spring (481) is executed between an internal housing (416) and the armature (112, 412).

15. Pressure control valve according to claim 13, in which the spring (481) is executed between an internal housing (416) and the pin (131, 431).

16. Pressure control valve according to one of the preceding claims, in which an additional channel is provided between the inlet (121) and the consumer connection (123), which is substantially closable by means of the slide valve (134).

17. Pressure control valve according to one of the preceding claims, in which via control of the seat valve (133) by means of the electric current, which flows through the coil (111), the pressure at the consumer connection (123) can be controlled via an at least partially substantially linear range.

18. Pressure control valve according to one of the preceding claims, in which the magnetic part (110) comprises a coil core (114), which is executed at least partially as dipping into the coil (111).

19. Pressure control valve according to one of the preceding claims, in which the slide valve (134) is provided in the inlet (121) of the valve part (120).

20. Pressure control valve according to one of the preceding claims, in which the seat valve (133) is provided in the return (122) of the valve part (120).

## Revendications

1. Vanne de régulation de pression (100) destinée à la régulation de pression d'un fluide,
comportant une partie magnétique (110), comprenant au moins une bobine électrique (111) et un induit (112) coulissant,
comportant une partie de vanne (120) comprenant une arrivée (121), un reflux (122), un raccord utilisateur (123) et un élément de vanne (130) coopérant avec l'induit (112),
ledit élément de vanne (130) comprenant un poussoir (134) et une soupape à siège (133) ainsi qu'une tige (131) qui est en liaison fonctionnelle directe avec l'induit (112), et dans lequel la soupape à siège (133) est réalisée sous la forme d'un premier élément de fermeture qui se ferme en cas d'alimentation croissante,
et le poussoir (134) étant réalisé sous la forme d'un second élément de fermeture au niveau d'un piston (132), ledit piston (132) étant soit prévu avec au moins une rainure (136, 202, 205, 208, 211, 214) pour le fluide, soit au moins un canal (606) étant prévu dans le dispositif de contrôle de pression (100), ledit canal étant réalisé sous forme d'évidement par l'intermédiaire duquel le fluide s'écoule depuis le raccord utilisateur (123) jusqu'au reflux (122).

2. Vanne de régulation de pression selon la revendication 1, dans laquelle la tige (131) comprend un évidement, en particulier un alésage (139) et/ou un alésage transversal (140) par l'intermédiaire duquel un fluide s'écoule à l'intérieur de la partie magnétique (110).

3. Vanne de régulation de pression selon l'une quelconque des revendications précédentes, dans laquelle la tige (131) ou l'induit (112) présente un moyen de guidage de fluide (137) de manière à ce qu'en particulier l'induit (112) soit coulissant dans le boîtier de bobine (118).

4. Vanne de régulation de pression selon la revendication 3, dans laquelle le moyen de guidage de fluide est une rainure de tige (137) pratiquée au niveau de la face externe de la tige (131).

5. Vanne de régulation de pression selon l'une quelconque des revendications précédentes, dans laquelle l'élément de vanne (130) comprend le piston (132) actionnable par l'intermédiaire de la tige (131).

6. Vanne de régulation de pression selon l'une des revendications 1 à 5, dans laquelle le piston (132) est réalisé de telle manière qu'un fluide peut s'écouler au moins en partie le long d'un alésage de commande (138) l'entourant.

7. Vanne de régulation de pression selon l'une quelconque des revendications précédentes, dans laquelle la rainure de piston (136, 202, 205, 208, 211, 214) est réalisée de façon angulaire ou circulaire.

8. Vanne de régulation de pression selon la revendication 6, dans laquelle le fluide s'écoule à travers une cavité pratiquée à l'intérieur du piston (132, 200, 203, 206, 209, 212).

9. Vanne de régulation de pression selon la revendication 6, dans laquelle le fluide s'écoule à travers une rainure circulaire (208) du piston (132, 206) réalisée sous forme de filetage.

10. Vanne de régulation de pression selon l'une quelconque des revendications 6 à 9, dans laquelle un ressort (135) qui pousse le piston (132) en direction de la tige (131) est prévu.

11. Vanne de régulation de pression selon l'une quelconque des revendications 6 à 10, dans laquelle le piston (132, 432) présente un obturateur de piston (480, 502, 505, 508).

12. Vanne de régulation de pression selon la revendication 11, dans laquelle l'obturateur de piston (480, 502, 505, 508) comprend une rainure prolongée ou un alésage transversal.

13. Vanne de régulation de pression selon l'une quelconque des revendications précédentes, dans laquelle un ressort (481) est prévu dans la partie magnétique, au moyen duquel une force de ressort est exercée sur l'induit (112, 412).

14. Vanne de régulation de pression selon la revendication 13, dans laquelle le ressort (481) est réalisé entre un boîtier intérieur (416) et l'induit (112, 412).

15. Vanne de régulation de pression selon la revendication 13, dans laquelle le ressort (481) est réalisé entre un boîtier intérieur (416) et la tige (131, 431).

16. Vanne de régulation de pression selon l'une quelconque des revendications précédentes, dans laquelle un canal additionnel est prévu entre l'arrivée (121) et le raccord utilisateur (123), qui peut fermer pour l'essentiel au moyen du poussoir (134).

17. Vanne de régulation de pression selon l'une quelconque des revendications précédentes, dans laquelle la pression peut être régulée au niveau du raccord utilisateur (123) sur une zone au moins en partie essentiellement linéaire via la commande de la soupape à siège (133) au moyen du courant électrique qui passe par la bobine (111).

18. Vanne de régulation de pression selon l'une quelconque des revendications précédentes, dans laquelle la partie magnétique (110) comprend un noyau de bobine (114) qui est réalisé au moins en partie de façon à s'enfoncer dans la bobine (111).

19. Vanne de régulation de pression selon l'une quelconque des revendications précédentes, dans laquelle le poussoir (134) est prévu dans l'arrivée (121) de la partie de vanne (120).

20. Vanne de régulation de pression selon l'une quelconque des revendications précédentes, dans laquelle la soupape à siège (133) est prévue dans le reflux (122) de la partie de vanne (120).
